(19) Europäisches Patentamt
European Patent Office
Office européen des brevets

(11) Veröffentlichungsnummer: **0 290 761**
**A2**

(12) # EUROPÄISCHE PATENTANMELDUNG

(21) Anmeldenummer: **88104743.5**

(22) Anmeldetag: **24.03.88**

(51) Int. Cl.4 **C08L 59/00 , //(C08L59/00, 75:04,77:00)**

(30) Priorität: **29.04.87 DE 3714267**

(43) Veröffentlichungstag der Anmeldung: **17.11.88 Patentblatt 88/46**

(84) Benannte Vertragsstaaten: **BE DE FR GB IT NL**

(71) Anmelder: **Degussa Aktiengesellschaft**
**Weissfrauenstrasse 9**
**D-6000 Frankfurt am Main 1(DE)**

(72) Erfinder: **Dorn, Klaus, Dr.**
**Theodor-Heuss-Strasse 81**
**D-6450 Hanau 9(DE)**
Erfinder: **Morlock, Gerhard, Dr,**
**Wildaustrasse 3**
**D-6450 Hanau 9(DE)**

(54) **Schlagzähe Polyoxymethylen-Formmassen.**

(57) Formmassen, die im wesentlichen bestehen aus

A) 68 bis 93 Gewichtsprozent mindestens eines Polyoxymethylens,

B) 5 bis 30 Gewichtsprozent mindestens eines thermoplastischen Polyuretyhans mit bestimmten Eigenschaften und

C) 2 bis 25 Gewichtsprozent eines thermoplastischen Polyetherblockcopolyamids mit bestimmten Eigenschaften, weisen eine verbesserte Stabilität und eine verringerte Neigung zur Bildung von Formbelägen bei der Spritzgußverarbeitung bei einem gleichzeitig unverändert guten Niveau der Schlagzähigkeit auf.

EP 0 290 761 A2

## Schlagzähe Polyoxymethylen-Formmassen

Die Erfindung betrifft eine schlagzähe Formmasse im wesentlichen bestehend aus einer ternären Mischung aus

A) mindestens einem Polyoxymethylen,

B) mindestens einem thermoplastischen Polyurethan mit einer Shore-Härte A bis zu 95 und einer Glasübergangstemperatur unter 0°C und

C) einem Polyamid, die daneben gegebenenfalls sonstige übliche Zusätze zu Polyoxymethylen-Formmassen enthält.

Aus der DE-PS 1 193 240 sind bereits zu Formkörpern wiederholt thermoplastisch zu verarbeitende Formmassen bekannt, die im wesentlichen bekannte hochmolekulare Polyurethanmassen und bekannte hochmolekulare Polyoxymethylene im Verhältnis von 5:95 Gewichtsprozent bis 95:5 Gewichtsprozent enthalten. Diese bekannten Formmassen können zusätzlich ein Polyamid, beispielsweise ein Polyamid aus polymerisiertem Caprolactam enthalten.

Aus der DE-OS 33 03 761 sind ebenfalls bereits schlagzäh modifizierte Polyoxymethylene bekannt, die neben dem Polyoxymethylen 5 bis 60 Gewichtsprozent, bezogen auf die Gesamtmischung, eines Polyurethans enthalten. Auch diese bekannten Formmassen können zusätzlich als Stabilisatoren gegen den Einfluß von Wärme nicht näher bezeichnete Polyamide enthalten.

Formmassen, die im wesentlichen nur aus einem Polyoxymethylen und einem thermoplastischen Polyurethan bestehen, sind jedoch nicht in ausreichendem Maße thermisch stabil, was sich durch im Vergleich zu reinen Polyoxymethylenen erhöhte Gewichtsverluste beim Erhitzen sowohl unter Stickstoff als auch bei Luftzutritt und insbesondere durch einen erhöhten Formbelag, der durch den bei der Spritzgußverarbeitung freiwerdenden monomeren Formaldehyd verursacht wird, bemerkbar macht. Auch der Zusatz von für die Stabilisierung von reinen Polyoxymethylen-Formmassen üblicherweise verwendeten Polyamiden in den üblicherweise angewandten Mengen führt nicht zu einer befriedigenden Verbesserung der thermischen Stabilität der Polyoxymethylen/Polyurethan-Mischungen.

Die erfindungsgemäße Formmasse ist nun dadurch gekennzeichnet, daß der Anteil der Komponente A) 68 bis 93 Gewichtsprozent, der Anteil der Komponente B) 5 bis 30 Gewichtsprozent und der Anteil der Komponente C) 2 bis 25 Gewichtsprozent beträgt, wobei sich die Anteile der drei genannten Komponenten zu 100 Gewichtsprozent addieren, und daß die Komponente C) ein thermoplastisches Polyetherblockcopolyamid mit einer Polyamid-Blocklänge von 600 bis 4000 und einer Polyether-Blocklänge von 600 bis 2000 Molekulargewichtseinheiten mit einer Shore-Härte zwischen Shore-Härte A 75 und Shore-Härte D 63 und einem Schmelzpunkt zwischen 120 und 200°C ist.

Besonders bevorzugt wird eine Zusammensetzung der erfindungsgemäßen Formmasse, in welcher der Anteil der Komponente A) 75 bis 85 Gewichtsprozent, der Anteil der Komponente B) 10 bis 20 Gewichtsprozent und der Anteil der Komponente C) 5 bis 15 Gewichtsprozent ausmacht, wobei sich wiederum die Anteile der drei Komponenten zu 100 Gewichtsprozent addieren.

Die erfindungsgemäßen Formmassen weisen eine verbesserte thermische Stabilität und eine verringerte Neigung zur Bildung von Formbelägen bei der Spritzgußverarbeitung bei einem gleichzeitig unverändert guten Niveau der Schlagzähigkeit auf. Da die erfindungsgemäß einzusetzenden thermoplastischen Polyetherblockcopolyamide zum Teil selbst als Schlagzähmacher wirken, können sie bei Einsatz in größerer Menge unter Umständen einen Teil des sonst zur Erzielung der gewünschten Schlagzähigkeit erforderlichen thermoplastischen Polyurethans ersetzen.

Die den Hauptbestandteil der erfindungsgemäßen Formmassen bildenden Polyoxymethylene können Homopolymere des Formaldehyds oder des Trioxans sein oder Copolymere des Trioxans. Sie können eine lineare Struktur aufweisen, aber auch verzweigt oder vernetzt sein. Sie können einzeln oder als Gemische eingesetzt werden.

Unter Homopolymeren des Formaldehyds oder des Trioxans werden dabei solche Polymere verstanden, deren halbacetalische Hydroxylendgruppen chemisch, beispielsweise durch Veresterung oder Veretherung, gegen Abbau stabilisiert sind. Unter Copolymeren des Trioxans werden Copolymere aus Trioxan und mindestens einer mit Trioxan copolymerisierbaren Verbindung verstanden.

Solche mit Trioxan copolymerisierbare Verbindungen sind beispielsweise cyclische Ether mit 3 bis 5, vorzugsweise 3 Ringgliedern, von Trioxan verschiedene cyclische Acetale, insbesondere Formale, mit 5 bis 11, vorzugsweise 5 bis 8 Ringgliedern, und lineare Polyacetale, insbesondere Polyformale. Die genannten Cokomponenten werden jeweils in Mengen von 0,01 bis 20, vorzugsweise 0,1 bis 10, insbesondere 1 bis 5 Gewichtsprozent, eingesetzt.

Als Comonomere sind insbesondere Verbindungen der Formel

$$\underline{CH_2-(CHR)_x-[O-(CH_2)_z]_y-O} \qquad (I)$$

geeignet, in der R ein Wasserstoffatom, einen Alkylrest mit 1 bis 6, vorzugsweise 1, 2 oder 3 Kohlenstoffatomen, der mit 1, 2 oder 3 Halogenatomen, vorzugsweise Chloratomen, substituiert sein kann, einen Alkoxymethylrest mit 2 bis 6, vorzugsweise 2, 3 oder 4 Kohlenstoffatomen, einen Phenylrest oder einen Phenoxymethylrest bedeutet, x eine ganze Zahl von 1 bis 3, wobei y gleich Null ist, y eine ganze Zahl von 1 bis 3, wobei x gleich Null und z gleich 2 ist, und z eine ganze Zahl von 3 bis 6, vorzugsweise 3 oder 4, darstellt, wobei x gleich Null und y gleich 1 ist.

Als cyclische Ether eignen sich vor allem Epoxide, z.B. Ethylenoxid, Styroloxid, Propylenoxid oder Epichlorhydrin, sowie Glycidylether von ein-oder mehrwertigen Alkoholen oder Phenolen.

Als cyclische Acetale eignen sich vor allem cyclische Formale von aliphatischen oder cycloaliphatischen $\alpha$,w-Diolen mit 2 bis 8, vorzugsweise 2, 3 oder 4 Kohlenstoffatomen, deren Kohlenstoffkette in Abständen von 2 Kohlenstoffatomen durch ein Sauerstoffatom unterbrochen sein kann, z.B.
Glykolformal (1,3-Dioxolan),
Propandiolformal (1,3-Dioxan),
Butandiolformal (1,3-Dioxepan) und
Diglykolformal (1,3,6-Trioxocan), sowie
4-Chlormethyl-1,3-dioxolan,
Hexandiolformal (1,3-Dioxonan) und
Butendiolformal (1,3-Dioxacyclohepten-5).

Geeignet sind aber auch, insbesondere für die Herstellung von Terpolymeren des Trioxans, Diformale, z.B. Diglycerindiformal.

Als lineare Polyacetale eignen sich sowohl Homo-oder Copolymere der vorstehend definierten cyclischen Acetale als auch lineare Kondensate aus aliphatischen oder cycloaliphatischen $\alpha$,w-Diolen mit aliphatischen Aldehyden oder Thioaldehyden, vorzugsweise Formaldehyd. Insbesondere werden Homopolymere cyclischer Formale von aliphatischen $\alpha$,w-Diolen mit 2 bis 8, vorzugsweise 2, 3 oder 4 Kohlenstoffatomen verwendet, z.B. Poly-(1,3-dioxolan), Poly-(1,3-dioxan) und Poly-(1,3-dioxepan).

Die Werte für die Viskositätszahl der erfindungsgemäß eingesetzten Polyoxymethylene (gemessen an einer Lösung des Polymeren in Dimethylformamid, das 2 Gewichtsprozent Diphenylamin enthält, bei 135°C in einer Konzentration von 0,5 g/100 ml) sollen im allgemeinen mindestens 30 (ml/g) betragen. Die Kristallitschmelzpunkte der Polyoxymethylene liegen im Bereich von 140 bis 180°C, vorzugsweise 150 bis 170°C, ihre Dichten betragen 1,38 bis 1,45 g x $ml^{-1}$, vorzugsweise 1,40 bis 1,43 g x $ml^{-1}$ (gemessen nach DIN 53 479).

Die erfindungsgemäß verwendeten, vorzugsweise binären oder ternären Trioxan-Copolymeren werden in bekannter Weise durch Polymerisieren der Monomeren in Gegenwart kationisch wirksamer Katalysatoren bei Temperaturen zwischen 0 und 150°C, vorzugsweise zwischen 70 und 140°C, hergestellt (vgl. z.B. DE-AS 14 20 283). Als Katalysatoren werden hierbei beispielsweise Lewissäuren, wie Bortrifluorid oder Antimonpentafluorid, und Komplexverbindungen von solchen Lewissäuren, vorzugsweise Etherate, z.B. Bortrifluorid-diethyl-etherat oder Bortrifluorid-di-tert.-butyletherat, verwendet. Ferner sind geeignet Protonensäuren, z.B. Perchlorsäure, sowie salzartige Verbindungen, z.B. Triphenylmethylhexafluorophosphat oder Triethyloxoniumtetrafluoroborat, Acetylperchlorat oder Ester der Perchlorsäure, z.B. Methoxymethylperchlorat oder tert.-Butylperchlorat. Zur Regelung des Molekulargewichts können alle Substanzen verwendet werden, von denen bekannt ist, daß sie bei der Polymerisation von Trioxan als Kettenüberträger wirken. Die Polymerisation kann in Masse, Suspension oder Lösung erfolgen. Zur Entfernung instabiler Anteile können die Copolymeren einem thermischen oder hydrolytischen kontrollierten, partiellen Abbau bis zu primären Alkoholendgruppen unterworfen werden (vgl. z.B. DE-ASen 14 45 273 und 14 45 294).

Die erfindungsgemäß verwendeten Homopolymeren des Formaldehyds oder des Trioxans werden ebenfalls in bekannter Weise durch katalytisches Polymerisieren des Monomeren hergestellt (vgl. z.B. DE-ASen 10 37 705 und 11 37 215).

Zum Schutz gegen die schädliche Einwirkung von Luftsauerstoff, insbesondere bei erhöhten Temperaturen, sollten die erfindungsgemäß verwendeten Polyoxymethylene ferner ein Antioxidationsmittel enthalten. Vorzugsweise werden phenolische Antioxidantien verwendet, vor allem solche mit 2 bis 6 Hydroxyphenylresten im Molekül, wie sie z.B. in der DE-PS 25 40 207 beschrieben sind.

Die erfindungsgemäß verwendeten Polyoxymethylene können schließlich auch noch sonstige übliche Zusätze zu Polyoxymethylen-Formmassen in den üblicherweise angewandten Mengen enthalten. Beispiele

für derartige sonstige Zusätze sind an sich bekannte Wärmestabilisatoren, z.B. Kondensationsprodukte von Carbonsäureamiden, wie Oxalsäure-, Malonsäure-, Isophthalsäure-, Terephthalsäurediamid und Trimesinsäuretriamid, schwerflüchtige s-Triazinderivate wie Melam, Melem und Melon, Kondensationsprodukte aus Melamin und Formaldehyd,und UV-Absorber und Lichtschutzmittel, z.B.
2-(2'-Hydroxyphenyl)-benzotriazole,
2,4-Bis-(2'-hydroxyphenyl)-6-alkyl-s-triazine,
4-Hydroxybenzophenone,
1,3-Bis-(2'-hydroxybenzoyl)-benzol-Derivate
und Oxalsäurediamide, wie
Oxalsäuredianilid.

Bei den erfindungsgemäß verwendeten thermoplastischen Polyurethanen handelt es sich um an sich bekannte Produkte, wie sie beispielsweise in der DE-PS 1 193 240 oder der DE-OS 2 051 028 beschrieben sind. Sie werden in an sich bekannter Weise durch Polyaddition aus Polyisocyanaten, insbesondere Diisocyanaten, Polyestern und/oder Polyäthern bzw. Polyesteramiden oder anderen geeigneten Hydroxy- bzw. Aminoverbindungen, wie hydroxyliertem Polybutadien, und gegebenenfalls Kettenverlängerern, wie niedermolekularen Polyolen, insbesondere Diolen, Polyaminen, insbesondere Diaminen, oder Wasser hergestellt.

Geeignete Diisocyanate sind beispielsweise Diisocyanate der allgemeinen Formel

OCN-R-NCO (II),

wobei R ein zweiwertiger, geradkettiger oder verzweigter aliphatischer Rest mit 1 bis 20, vorzugsweise 2 bis 12 Kohlenstoffatomen, ein zweiwertiger cycloaliphatischer Rest mit 4 bis 20, vorzugsweise 6 bis 15 Kohlenstoffatomen oder ein zweiwertiger, substituierter oder unsubstituierter aromatischer Rest mit 6 bis 25, vorzugsweise 6 bis 15 Kohlenstoffatomen, ist.

Als zweiwertiger aliphatischer Rest kommt z.B. der Alkylenrest $-(CH_2)_n-$mit n vorzugsweise 2 bis 12 in Frage, wie Ethylen-, Propylen-, Pentamethylen-oder Hexamethylenrest, oder der 2-Methylpentamethylen-, der 2,2,4-Trimethyl-hexamethylen-oder der 2,4,4-Trimethylhexamethylenrest. Diisocyanate dieses Typs, die besonders bevorzugt werden, sind das Hexamethylen-diisocyanat, sowie 2,2,4-und 2,4,4-Trimethylhexamethylendiisocyanat.

R kann in obiger Formel (II) auch eine Kombination von zweiwertigen offenkettigen aliphatischen und cycloaliphatischen Resten darstellen und beispielsweise die Bedeutung

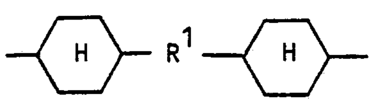

(III)

haben, worin $R^1$ einen gesättigten geradkettigen oder verzweigten aliphatischen Rest mit 1 bis 8, vorzugsweise 1 bis 3 Kohlenstoffatomen, bedeutet. Die beiden Ringe stehen hier vorzugsweise für das unsubstituierte Cyclohexylen, während $R^1$ vorzugsweise die Methylen-, Ethylen-, Methylmethylen-oder Dimethylmethylen-Gruppe bedeutet.

Wenn R in der obigen Formel (II) einen zweiwertigen aromatischen Rest darstellt, so ist dies bevorzugt der Toluylen-, Diphenylenmethan-, Phenylen-oder Naphthylenrest. Beispiele für entsprechende Diisocyanate sind: 2,4-Toluylendiisocyanat, 2,6-Toluylendiisocyanat, Diphenyl-methan-4,4-diisocyanat, 3,3-Dimethyldiphenylmethan-4,4-diisocyanat, 3,3-Dimethyl-4,4-diphenylen-diisocyanat (3,3-Ditoluylen-4,4-diisocyanat), m-Phenylen-diisocyanat, p-Phenylendiisocyanat, o-Phenylendiisocyanat, Chlorphenylen-2,4-toluylendiisocyant, 3,3-Dichlordiphenylen-4,4-diisocyanat, 4-Chlor-1,3-phenylendiisocyanat, 1,5-Naphthylendiisocyanat und 1,4-Naphtylendiisocyanat.

Die Diisocyanate der Formel (II) können auch in oligomerer, beispielsweise in dimerer oder trimerer Form zum Einsatz kommen. Anstelle der Polyisocyanate können auch in bekannter Weise blockierte Polyisocyanate verwendet werden, die man aus den genannten Isocyanaten z.B. durch Addition von Phenol oder Caprolactam erhält.

Als aliphatische Polyhydroxylverbindungen kommen Polyether, wie Polyethylenglykolether, Polypropylenglykolether und Polybutylenglykolether, Poly-1,4-butandiolether oder Mischpolyether aus Ethylenoxid und Propylenoxid in Betracht. Außerdem können für diesen Zweck Polyersteramide, Polyacetale und vorzugsweise aliphatische Polyester eingesetzt werden, wobei alle diese Verbindungen freie OH-Endgruppen besitzen.

Bei den aliphatischen Polyestern handelt es sich im wesentlichen um unvernetzte Polyester mit Molekulargewichten von 500-10 000, vorzugsweise von 500 - 5 000. Hinsichtlich der Säurekomponente

leiten sie sich von unverzweigten und oder verzweigten aliphatischen Dicarbonsäuren ab, wie Dicarbonsäuren der allgemeinen Formel

HOOC - $(CH_2)_n$ -COOH (IV)

mit n = 0 bis 20, vorzugsweise 4 bis 10, insbesondere Adipinsäure und Sebacinsäure. Auch cycloaliphatische Dicarbonsäuren, wie Cyclohexandicarbonsäuren, sowie deren Gemische mit den obigen aliphatischen Dicarbonsäuren können für diesen Zweck eingesetzt werden.

Als Alkoholkomponente für diese Polyester kommen vor allem unverzweigte oder verzweigte aliphatische primäre Diole, wie Diole der allgemeinen Formel

HO - $(CH_2)_m$ -OH (V)

in Betracht, in der m = 2 bis 12, vorzugsweise 2 bis 6 bedeutet. Genannt seien hier insbesondere Ethylenglykol, 1,4-Butandiol, 1,6-Hexandiol und 2,2-Dimethylpropandiol-1,3, sowie Diethylenglykol. Auch cycloaliphatische Diole, wie Bis-hydroxymethyl-cyclohexane, oder deren Gemische mit den aliphatischen Diolen sind hierfür geeignet.

Die Polyester können aus jeweils einer Dicarbonsäure und einem Diol, aber auch, wie erwähnt, aus Gemischen mehrerer Dicarbonsäuren und/oder mehrerer Diole hergestellt werden.

Als Kettenverlängerer bei der Herstellung der Polyurethane sind vor allem niedermolekulare Polyole, insbesondere Diole, sowie Polyamine, insbesondere Diamine, oder auch Wasser in Betracht zu ziehen.

Die erfindungsgemäß einzusetzenden Polyurethane sind thermoplastisch, d.h. im wesentlichen unvernetzt und daher wiederholt ohne nennenswerte Zersetzungserscheinungen schmelzbar.

Ihre reduzierten spezifischen Viskositäten, gemessen bei 25 ±0,1°C als 0,25 gewichtsprozentige Lösung in Dimethylformamid liegen zwischen 50 und 300 ml/g, vorzugsweise zwischen 100 und 200 ml/g. Die Werte für die Reißdehnung nach DIN 53 504 betragen 350 bis 1500 %, vorzugsweise 400 bis 1000 %. Die Shore-Härte A sollte unter 95 liegen, vorzugsweise zwischen 50 und 90, während die Glastemperatur (DSC) unter 0°C, vorzugsweise unter -20°C liegt.

Die beschriebenen Polyurethane können einzeln oder auch als Mischungen verschiedener Molekulargewichte und/oder Grundtypen in das Polyoxymethylen eingearbeitet werden.

Bei den erfindungsgemäß einzusetzenden Polyamiden handelt es sich um thermoplastische Polyetherblockcopolyamide mit Gewichtsverhältnissen Polyamid : Polyether von 80:20 bis 20:80. Das Molekulargewicht der harten Polyamid-Blöcke kann 600 - 4000 betragen, vorzugsweise 800-2000, die Länge der weichen Polyether-Blöcke 600-2000 Molekulargewichtseinheiten. Die Shore-Härte der Polyetherblockcopolyamide sollte zwischen Shore-Härte A 75 und Shore-Härte D 63, vorzugsweise zwischen Shore-Härte A 75 und Shore-Härte D 55, liegen.

Die Polyetherblockcopolyamide sollten in einem Temperaturbereich zwischen 120 und 200°C schmelzen, vorzugsweise zwischen 140 und 170°C.

Das Grundgerüst der Polyamid-Blöcke kann aus Poly-(caprolactam) (PA 6), Poly(11-aminoundecanamid) (PA 11), Poly(laurinlactam) (PA 12), Poly(hexamethylenadipamid) (PA 66), Poly-(hexymethylensebacamid) (PA 610), Poly(hexamethylendodecanamid) (PA 612) sowie entsprechenden Copolymeren bestehen, vorzugsweise jedoch aus Poly(laurinlactam).

Als Polyether-Blöcke eignen sich Polyethylenglykol, Polypropylenglykol, Polytetramethylenglykol oder Mischpolyether aus Ethylenoxid und Propylenoxid, besonders jedoch Polytetramethylenglykol. Ebenso können OH-terminierte Polyacetale,wie Poly(1,3-dioxolan) oder Poly(1,3-dioxepan) eingesetzt werden.

Die erfindungsgemäß eingesetzten Polyetherblockcopolyamide können in an sich bekannter Weise durch Polykondensation einer Schmelze von entsprechenden Polyetherdiolen und Polyamid-Zwischenprodukten mit Carboxylendgruppen dargestellt werden. Sie sind beispielsweise unter dem Handelsnamen PEBAX von der Firma ATOCHEM kommerziell erhältlich.

Die erfindungsgemäßen Formmassen werden durch Mischen der zweckmäßigerweise überwiegend in Pulver-oder Granulatform vorliegenden Komponenten und anschließendes Homogenisieren hergestellt. Einzelne Komponenten können jedoch auch in Lösung oder in dispergierter Form zugesetzt werden, entweder in der Misch-oder erst in der Homogenisiervorrichtung.

Das Mischen erfolgt üblicherweise bei Raumtemperatur, vorzugsweise bei einer Temperatur von 15 bis 30°C, und das Homogenisieren erfolgt in beliebigen heizbaren Mischwerken, z.B. Walzen, Kalandern, Knetern oder Extrudern, bei einer Temperatur oberhalb des Kristallitschmelzpunktes des Polyoxymethylens, d.h. bei einer Temperatur von 150 bis 250°C, vorzugsweise bei 170 bis 200°C.

Werden rohe Polyoxymethylen-Copolymere zur Herstellung der Formmassen eingesetzt, ist es besonders günstig, das thermoplastische Polyurethan und/oder das Polyetherblockcopolyamid einzeln oder gemeinsam in die durch Entgasung von freiem Formaldehyd befreite Schmelze fest oder bereits aufgeschmolzen einzudosieren. Beim Einsatz bereits durch partiellen thermischen oder hydrolytischen Abbau zu primären Alkoholendgruppen stabilisierter Polyoxymethylen-Copolymerer bzw. durch Endgruppenverkappung stabilisierter Polyoxymethylen-Homopolymerer ist es günstig, die Komponenten in der Pulver-bzw Granulatform zu mischen.

Die nachfolgenden Beispiele und Vergleichsversuche sollen die Erfindung veranschaulichen, wobei exemplarisch an einem ausgewählten thermoplastischen Polyurethan die Wirkung der Polyetherblockcopolyamide im Vergleich zu Standardpolyamiden gezeigt werden soll.

Die in den Beispielen angegebenen Prozentzahlen sind Gewichtsprozente, jeweils bezogen auf die Gesamtformmasse. Die thermischen Stabilitäten unter Stickstoff ($N_2$) und Luft werden als Gewichtsverlust nach 2 Stunden bei 220°C ermittelt. Der MFI wird bei 190°C und 2,16 kp Belastung bestimmt.

Zur Ermittlung der Schlagzähigkeit bei -40°C werden Rundscheiben mit 60 mm Durchmesser und 2 mm Dicke 16 Stunden bei -40°C eingefroren und dann jeweils innerhalb 15 Sekunden bei 23 ± 1°C nach DIN 53 443 nach der Eingabelungsmethode abgeprüft. Angegeben wird die 50% - Schädigungsarbeit W in Joule.

Die Beurteilung der Belagsbildung erfolgt nach jeweils 100 Schuß bei einer Formtemperatur von 120°C.

Einstufung:
+ + + = mittel
+ + = leicht
+ = kaum
0 = sauber

Eingesetzte Materialien:

A) Polyoxymethylen (POM):

Copolymeres aus Trioxan und 1,3-Dioxepan mit ca. 2,5% Comonomeranteil, stabilisiert mit 0,3% eines Melamin-Formaldehyd-Kondensats als Wärmestabilisator und 0,3% Hexandiol-1,6-bis -(3,5-di-tert.butyl-4-hydroxyphenyl) propionat als Antioxidans.
MFI:8 bis 10 g/10 min.

B) Thermoplastisches Polyurethan (TPU):

Aromatisches thermoplastisches Polyurethan mit einer Shore-Härte A von 85, einer Reißdehnung von 450% und einer Glasübergangstemperatur von -45°C.

C) Thermoplastische Polyetherblockcopolyamide (TPA):

TPA1: Polyetherblockcopolyamid [PA12-Polytetramethylenglykol (PTMG) ] mit einer Shore-Härte A von 75 und einem Schmelzpunkt von 148°C.
Handelsname: PEBAX 2533.

TPA2: Polyetherblockcopolyamid (PA12 - PTMG) mit einer Shore-Härte A von 83 und einem Schmelzpunkt von 152°C.
Handelsname: PEBAX 3533.

TPA3: Polyetherblockcopolyamid (PA12 - PTMG) mit einer Shore-Härte A von 90 und einem Schmelzpunkt von 168°C.
Handelsname: PEBAX 4033.

TPA4: Polyetherblockcopolyamid (PA12 - PTMG) mit einer Shore-Härte D von 55 und einem Schmelzpunkt von 168°C.
Handelsname: PEBAX 5533.

TPA5: Polyetherblockcopolyamid (PA12 - PTMG) mit einer Shore-Härte D von 63 und einem Schmelzpunkt von 173°C.
Handelsname: PEBAX 6333.

D) Vergleichspolyamide (PA) :

PA1: Poly(hexamethylenadipamid) mit einem Schmelzpunkt von 220°C und einer Kugeldruckhärte von 150N/mm$^2$.

PA2: Oligomeres Copolyamid aus Poly(caprolactam) und Poly(hexamethylenadipamid) mit einem Schmelzbereich von 188 bis 189°C.

PA3: Poly(11-aminoundecanamid) mit einem Schmelzbereich von 184 bis 187°C und einer Shore-Härte D von 70.

PA4: Poly(laurinlactam) mit einem Schmelzbereich von 168 bis 172°C und einer Shore-Härte A von 72.

PA5: Poly(caprolactam) mit einem Schmelzbereich von 217 bis 221°C und einer Kugeldruckhärte von 130 N/mm$^2$.

PA6: Poly(caprolactam) mit einem Schmelzbereich von 217 bis 221°C und einer Kugeldruckhärte von 90 N/mm$^2$.

PA7: Poly(laurinlactam) mit einer Vicaterweichungstemperatur von 150°C und einer Shore-Härte D von 63.

PA8: Poly(11-aminoundecanamid) mit einem Schmelzbereich von 183 bis 187°C und einer Shore-Härte D von 63.

PA9: Copolyamid aus Poly(caprolactam) und Poly(hexa methylenadipamid) mit einem Schmelzbereich von 196°C.

Vergleichsversuch a und Beispiele 1 bis 3:

Die Komponenten POM, TPU und TPA1 wurden in Granulatform in den in Tabelle 1 angegebenen Gewichtsverhältnissen vermischt, in einem Zweischneckenextruder homogenisiert und die homogenisierte Mischung wurde erneut granuliert. Die thermischen Stabilitäten wurden am Granulat bestimmt, die 50% - Schädigungsarbeit W an den oben beschriebenen Probekörpern. Die Ergebnisse sind in Tabelle 1 zusammengestellt:

Tabelle 1

| Vergleichsversuch bzw. Beispiel | POM-TPU-TPA 1 (%) | GV $N_2$ (%) | GV LUFT | W(-40°C) (J) | Belag |
|---|---|---|---|---|---|
| a | 80-20-0 | 0,38 | 1,00 | 40±2 | ++ |
| 1 | 80-18-2 | 0,35 | 0,94 | 37±2 | ++ |
| 2 | 80-16-4 | 0,15 | 0,54 | 42±4 | + |
| 3 | 80-14-6 | 0,06 | 0,57 | 38±3 | 0 |

Vergleichsversuch b und Beispiele 4 bis 7:

Verschiedene thermoplastische Polyetherblockcopolyamide wurden mit POM und TPU in den in Tabelle 2 angegebenen Gewichtsverhältnissen vermischt, in einem Zweischneckenextruder homogenisiert und die homogenisierte Mischung wurde erneut granuliert. Die Prüfungen wurden wie oben vorgenommen. Die Ergebnisse sind in Tabelle 2 zusammengestellt:

Tabelle 2

| Vergleichs- versuch bzw. Beispiel | | POM-TPU-TPA / (%) 80-20-0 | | | | POM-TPU-TPA / (%) 80-14-6 | | | | POM-TPU-TPA / (%) 80-10-10 | | | |
|---|---|---|---|---|---|---|---|---|---|---|---|---|---|
| | | GV $N_2$ (%) | GV Luft (%) | W(-40°C) (J) | Belag | GV $N_2$ (%) | GV Luft (%) | W(-40°C) (J) | Belag | GV $N_2$ (%) | GV Luft (%) | W(-40°C) (J) | Belag |
| b | - | 0,32 | 1,00 | 40±2 | ++ | | | | | | | | |
| 4 | TPA 2 | | | | | 0,22 | 0,58 | 49±9 | 0 | 0,07 | 0,85 | 43±7 | 0 |
| 5 | TPA 3 | | | | | 0,29 | 0,49 | 47±2 | 0 | 0,25 | 0,39 | 39±4 | 0 |
| 6 | TPA 4 | | | | | 0,42 | 0,51 | 31±4 | + | 0,19 | 0,49 | 38±4 | 0 |
| 7 | TPA 5 | | | | | 0,31 | 0,67 | 33±2 | + | 0,19 | 0,52 | 20±1 | 0 |

Vergleichsversuche c und d und Beispiele 8 bis 14:

Die Komponenten POM, TPU und TPA2 wurden in Granulatform in den in Tabelle 3 angegebenen Gewichtsverhältnissen vermischt, in einem Zweischneckenextruder homogenisiert und die homogenisierte Mischung wurde erneut granuliert. Die Prüfungen wurden wie oben vorgenommen. Die Ergebnisse sind in Tabelle 3 zusammengestellt:

Tabelle 3

| Vergleichsversuch bzw. Beispiel | POM-TPU-TPA 2 (%) | GV $N_2$ (%) | GV Luft (%) | W(-40°C) (J) | Belag |
|---|---|---|---|---|---|
| c | 75-25-0 | 0,55 | 1,34 | 35±5 | ++ |
| 8 | 75-23-2 | 0,57 | 1,00 | 40±3 | ++ |
| 9 | 75-20-5 | 0,29 | 0,61 | 44±5 | + |
| 10 | 75-15-10 | 0,17 | 1,00 | 38±6 | 0 |
| 11 | 75-10-15 | 0,11 | 1,29 | 31±5 | 0 |
| d | 85-15-0 | 0,55 | 1,31 | 22±3 | + |
| 12 | 85-13-2 | 0,52 | 0,92 | 31±1 | + |
| 13 | 85-10-5 | 0,25 | 0,79 | 31±5 | 0 |
| 14 | 85-5-10 | 0,11 | 1,34 | 25±7 | 0 |

Vergleichsversuche e bis v:

Verschiedene Standardpolyamide wurden mit POM und TPU in den in Tabelle 4 angegebenen Gewichtsverhältnissen vermischt, in einem Zweischneckenextruder homogenisiert und die homogenisierte Mischung wurde erneut granuliert. Die Prüfungen wurden wie oben vorgenommen. Die Ergebnisse sind in Tabelle 4 zusammengestellt:

Tabelle 4

| Vergleichs-versuch | POM-TPU-PA (%) | PA | GV $N_2$ (%) | GV Luft (%) | W(-40°C) (J) | Belag |
|---|---|---|---|---|---|---|
| e | 80-20-0 | - | 0,38 | 1,00 | 40±2 | ++ |
| f | 80-18-2 | PA1 | 0,74 | 1,14 | <2 | ++ |
| g | 80-16-4 | PA1 | 0,76 | 1,14 | <2 | +++ |
| h | 80-14-6 | PA1 | 0,70 | 1,17 | <1 | +++ |
| i | 80-18-2 | PA2 | 0,74 | 1,29 | 15±1 | ++ |
| j | 80-16-4 | PA2 | 0,55 | 1,34 | 6±1 | ++ |
| k | 80-14-6 | PA2 | 0,41 | 0,99 | <2 | ++ |
| l | 80-18-2 | PA3 | 2,11 | 2,90 | - | - |
| m | 80-16-4 | PA3 | 9,65 | 11,46 | - | - |
| n | 80-14-6 | PA3 | 17,2 | 20,4 | - | - |
| o | 80-18-2 | PA4 | 0,48 | 0,92 | 27±5 | ++ |
| p | 80-16-4 | PA4 | 0,56 | 0,97 | 33±2 | ++ |
| q | 80-14-6 | PA4 | 0,47 | 0,94 | 29±13 | ++ |
| r | 80-14-6 | PA5 | 1,01 | 1,38 | 14±2 | +++ |
| s | 80-14-6 | PA6 | 0,74 | 1,16 | 18±9 | ++ |
| t | 80-14-6 | PA7 | 0,67 | 0,78 | 35±7 | ++ |
| u | 80-14-6 | PA8 | 0,47 | 0,80 | 40±9 | ++ |
| v | 80-14-6 | PA9 | 0,70 | 1,19 | 33±3 | ++ |

**Ansprüche**

Schlagzähe Formmasse im wesentlichen bestehend aus einer ternären Mischung aus

A) mindestens einem Polyoxymethylen,

B) mindestens einem thermoplastischen Polyurethan mit einer Shore-Härte A bis zu 95 und einer Glasübergangstemperatur unter 0°C und

C) einem Polyamid,

die daneben gegebenenfalls sonstige übliche Zusätze zu Polyoxymethylen-Formmassen enthält, dadurch gekennzeichnet, daß der Anteil der Komponente A) 68 bis 93 Gewichtsprozent, der Anteil der Komponente B) 5 bis 30 Gewichtsprozent und der Anteil der Komponente C) 2 bis 25 Gewichtsprozent beträgt, wobei sich die Anteile der drei genannten Komponenten zu 100 Gewichtsprozent addieren, und daß die Komponente C) ein thermoplastisches Polyetherblockcopolyamid mit einer Polyamid-Blocklänge von 600 bis 4000 und einer Polyether-Blocklänge von 600 bis 2000 Molekulargewichtseinheiten mit einer Shore-Härte zwischen Shore-Härte A 75 und Shore-Härte D 63 und einem Schmelzpunkt zwischen 120 und 200°C ist.